# EUROPEAN PATENT APPLICATION

(11) **EP 3 024 151 A1**
(43) Date of publication of application: **25.05.2016**
(21) Application number: 14826021.9
(22) Date of filing: 02.07.2014
(51) Int. Cl.: H04B 1/38, H01Q 3/26, H04B 1/04

(54) **POINT-TO-POINT WIRELESS SYSTEM, COMMUNICATION APPARATUS AND COMMUNICATION CONTROL METHOD**

(30) Priority: 18.07.2013 JP 2013149366
(71) Applicant: NEC Corporation, Tokyo 108-8001 (JP)
(72) Inventor: KIKUMA, Tomohiro, Tokyo 108-8001 (JP)
(74) Representative: Glawe, Delfs, Moll
(86) International application number: PCT/JP2014/003520
(87) International publication number: WO 2015/008442

(57) **Abstract**

A communication apparatus (1) includes a communication unit (11) and a control unit (12). The communication unit (11) is electrically connected to an antenna (10) attached to a structure (40). The control unit (12) controls, based on a quality index indicating communication quality related to vibrations of the structure (40), a radio communication parameter to be applied to the communication unit (11). This can contribute, for example, to suppression of degradation of the communication quality of a radio link which occurs due to the vibrations of the structure to which the communication apparatus is attached.

## Description

### Technical Field

The present application relates to an adaptive adjustment of a modulation scheme, a code rate and the like in a point-to-point radio system.

### Background Art

Point-to-point radio systems using microwaves, millimeter waves or the like are known (see, for example, Patent Literature 1). In a point-to-point radio system, two communication apparatuses perform digital communication via a point-to-point radio link. Specifically, the two communication apparatuses are equipped with directional antennas and form directed beams toward each other. In this way, the point-to-point radio link is established between the two communication apparatuses.

Communication quality of the point-to-point radio link depends on meteorological conditions (e.g., rain, fog, and haze). This is because rain, fog, haze or the like degrades line-of-sight visibility between the two communication apparatuses and attenuates radio signals (e.g., microwaves or millimeter waves). Therefore, the point-to-point radio system performs adaptive processing including adjusting a modulation scheme, a code rate and the like based on the communication quality (e.g., received signal strength (received signal strength indicator (RSSI)), a signal to noise ratio (SNR), or a bit error rate (BER)) of the point-to-point radio link. Patent Literature 1 and 2 disclose this adaptive processing. The adaptive processing that adjusts a modulation scheme, a code rate and the like based on communication quality of a radio link is called "adaptive modulation and coding (AMC) " or "link adaptation".

Point-to-point radio systems are used, for example, in a mobile backhaul. The mobile backhaul means communication lines that connect base stations of a cellular communication system to a core network and communication lines that connect base stations. Compared to wired connections using optical fibers, point-to-point radio systems have many advantages, such as easy networking, low costs, and mitigation of conditions for an installation location of a base station.

### Citation List

### Patent Literature

[Patent Literature 1] European Patent No. 1545037
[Patent Literature 2] Japanese Unexamined Patent Application Publication No. 2005-94605

### Summary of Invention

### Technical Problem

In the cellular communication system, small cells each having coverage of several tens to several hundreds of meters are mainly used in urban areas to increase communication capacity, enhance communication speed, and compensate for coverage holes. The small cells may be called pico cells or femto cells.

When a point-to-point radio system is used as a mobile backhaul for a small-cell base station, a new problem stated below may occur. The small-cell base station may be located in a place nearer a street level (e.g., a lamp post and a bus shelter) compared to a macrocell base station. In this case, similar to the small-cell base station, a point-to-point radio communication apparatus may also be installed in the lamp post, the bus shelter and the like. However, the lamp post, the bus shelter and the like can be easily deformed and mechanically vibrated by an external force such as wind, vibrations caused by a subway, and an earthquake. These mechanical vibrations may not be a big problem for the small-cell base station. On the other hand, since the point-to-point radio communication apparatus communicates with the opposing apparatus using a directed beam toward the opposing apparatus, the mechanical vibrations may cause fluctuations in the direction of the antenna and degrade the communication quality significantly.

The present invention has been made in view of the aforementioned discussion by the present inventor and aims to provide a point-to-point radio system, a communication apparatus, a communication control method, and a program that contribute to suppressing degradation of communication quality of a radio link which occurs due to mechanical vibrations of a structure to which a point-to-point radio communication apparatus is attached.

### Solution to Problem

In a first aspect, a point-to-point radio system includes first and second communication apparatuses and a control unit. The first and second communication apparatuses are configured to be respectively connected to first and second antennas and to perform communication through the first and second antennas. The first and second antennas are respectively attached to first and second structures. The control unit is configured to adjust, based on a quality index related to mechanical vibrations of at least one of the first and second structures, a radio communication parameter to be applied to the communication.

In a second aspect, a communication apparatus for a point-to-point radio communication includes an antenna, a communication unit, and a control unit. The communication unit is connected to the antenna attached to a structure. The control unit is configured to adjust, based on a quality index indicating communication quality related to vibrations of the structure, a radio communication parameter to be applied to the communication.

In a third aspect, a communication control method for a point-to-point radio communication includes: performing communication through an antenna attached to a structure; and controlling, based on mechanical vibrations of the structure, a radio communication parameter to be applied to the communication.

In a fourth aspect, a program includes instructions to cause a computer to perform the method according to the third aspect stated above.

In a fifth aspect, a point-to-point radio system includes first and second communication apparatuses and a control unit. The first and second communication apparatuses are configured to be respectively connected to first and second antennas and to perform communication through the first and second antennas. The first and second antennas are respectively attached to first and second structures. The control unit is configured to adjust, based on a first quality index related to propagation characteristics of a radio link and a second quality index related to mechanical vibrations of at least one of the first and second structures, a radio communication parameter to be applied to the communication.

In a sixth aspect, a communication apparatus for a point-to-point radio communication includes a communication unit and a control unit. The communication unit is connected to an antenna attached to a structure. The control unit is configured to adjust, based on a first quality index related to propagation characteristics of a radio link and a second quality index related to mechanical vibrations of the structure, a radio communication parameter to be applied to the communication.

In a seventh aspect, a communication control method for a point-to-point radio communication includes: performing communication through an antenna attached to a structure; and adjusting, based on a first quality index related to propagation characteristics of a radio link and a second index related to mechanical vibrations of the structure, a radio communication parameter to be applied to the communication.

In an eighth aspect, a program includes instructions to cause a computer to perform the method according to the seventh aspect stated above.

### Advantageous Effects of Invention

According to the aspects stated above, it is possible to provide a point-to-point radio system, a communication apparatus, a communication control method, and a program that contribute to suppressing degradation of communication quality of a radio link which occurs due to mechanical vibrations of a structure to which a point-to-point radio communication apparatus is attached.

### Brief Description of Drawings

Fig. 1 is a block diagram showing a configuration example of a point-to-point radio system according to a first embodiment;
Fig. 2 is a diagram showing mechanical vibrations of a structure to which a point-to-point radio antenna is attached;
Fig. 3 is a frequency distribution diagram indicating degradation of communication quality caused by mechanical vibrations of a structure to which a point-to-point radio antenna is attached;
Fig. 4 is a flowchart showing one example of an adaptive control procedure in the point-to-point radio system according to the first embodiment;
Fig. 5 is a block diagram showing a configuration example of a communication apparatus according to a second embodiment;
Fig. 6 is a flowchart showing one example of an adaptive control procedure in a point-to-point radio system according to the second embodiment;
Fig. 7 is a block diagram showing a configuration example of a communication apparatus according to a third embodiment;
Fig. 8 is a flowchart showing one example of an adaptive control procedure in a point-to-point radio system according to the third embodiment; and
Fig. 9 is a flowchart showing one example of an adaptive control procedure in a point-to-point radio system according to a fourth embodiment.

### Description of Embodiments

Hereinafter, with reference to the drawings, specific embodiments will be described in detail. Throughout the drawings, identical or corresponding components are denoted by the same reference symbols, and overlapping descriptions will be omitted as appropriate for the sake of clarification of description.

### First embodiment

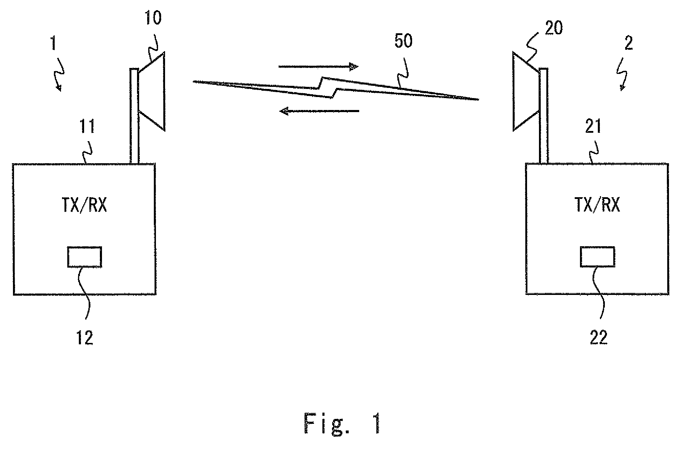

Fig. 1 shows a configuration example of a point-to-point radio system according to this embodiment. The point-to-point radio system according to this embodiment includes communication apparatuses 1 and 2. The communication apparatuses 1 and 2 include antennas 10 and 20, respectively. The antennas 10 and 20 are directional antennas. The communication apparatuses 1 and 2 form directed beams toward each other to establish a pint-to-point radio link 50 between the antennas 10 and 20, and transmit signals at least in one direction between them via the radio link 50. In the specific example shown in Fig. 1, the communication apparatuses 1 and 2 include transceivers 11 and 21, respectively, and transmit signals bidirectionally via the radio link 50.

The communication apparatuses 1 and 2 further include controllers 12 and 22, respectively. Each of the controllers 12 and 22 performs adaptive processing to maintain communication quality (e.g., received signal strength, SNR, or BER) of the point-to-point radio link 50. The controllers 12 and 22 may perform, as stated in the Background Art, AMC (or link adaptation) that changes a modulation scheme, a code rate and the like according to the communication quality of the radio link 50 to deal with changes in a propagation state according to meteorological conditions (e.g., rain, fog, mist, haze, smoke, or smog).

Further, each of the controllers 12 and 22 adjusts a radio communication parameter (e.g., one or both of the modulation scheme and the code rate) based on mechanical vibrations of the antenna 10 or 20 in order to compensate for degradation of the communication quality of the radio link 50 due to mechanical vibrations of the antenna 10 or 20. In other words, each of the controllers 12 and 22 adjusts the radio communication parameter based on a quality index related to mechanical vibrations of a structure to which the antenna 10 or 20 is attached. The mechanical vibrations of the structure to which the antenna 10 or 20 is attached are conducted to the antenna 10 or 20. Accordingly, it can also be said that each of the controllers 12 and 22 adjusts the radio communication parameter based on a quality index related to mechanical vibrations of the antenna 10 or 20.

The quality index related to mechanical vibrations of a structure may include measurement values indicating displacement, velocity, or acceleration of the structure to which the antenna 10 or 20 is attached. The measurement values may be obtained by a vibration sensor coupled to the structure to which the antenna 10 or 20 is attached. Alternatively, the quality index related to mechanical vibrations of a structure may include a statistical value (e.g., standard deviation or dispersion) indicating fluctuations in the communication quality (e.g., RSSI, SNR, or BER) of the radio link 50.

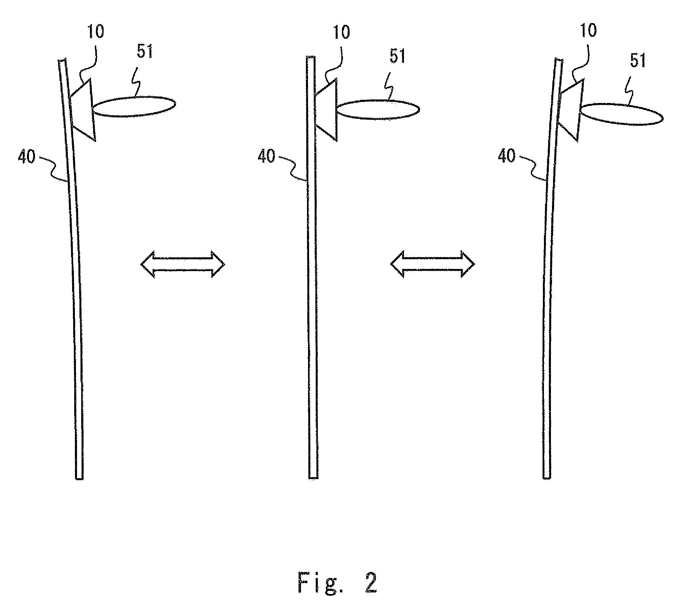

In the following description, an influence of mechanical vibrations of the antennas 10 and 20 on the communication quality of the radio link 50 and details of the adaptive processing to compensate for this influence will be described. Fig. 2 shows a specific example of mechanical vibrations of the structure to which the antenna 10 is attached. In the example shown in Fig. 2, the antenna 10 is fixedly attached to the structure 40 (e.g., a lamp post or a bus shelter). Not only the antenna 10, but the communication apparatus 1 including the antenna 10 and the transceiver 11 may be attached to the structure 40. Further, when the communication apparatus 1 is used for a mobile backhaul of a small-cell base station, the communication apparatus 1 and the small-cell base station may be attached to the structure 40. Furthermore, besides the communication apparatus 1 and the small-cell base station, a data transfer apparatus may be attached to the structure 40. The data transfer apparatus transfers data packets (e.g., Internet Protocol (IP) packets) or data frames (e.g., Media Access Control (MAC) frames) between the communication apparatus 1 and the small-cell base station. The data transfer apparatus is, for example, a router, a layer-3 switch, or a layer-2 switch.

The structure 40 is deformed and mechanically vibrated due to an external force such as wind, vibrations caused by a subway, and an earthquake. The vibrations of the structure 40 cause mechanical vibrations of the antenna 10. Since the antenna 10 forms a directed beam 51 toward the antenna 20 of the communication apparatus 2 for communication, mechanical vibrations of the antenna 10 may cause fluctuations in the direction of the antenna 10 (i.e., directed beam 51) and, accordingly, significantly degrade the communication quality of the radio link 50.

The AMC to deal with changes in the propagation state according to the meteorological conditions, which is described in the Background Art, may only need to be performed in accordance with speed of changes in weather. Specifically, the modulation scheme, the code rate and the like may be changed according to a magnitude of an average of measurement values of the communication quality of the radio link (e.g., RSSI, SNR, or BER) observed with a long time scale corresponding to speed of changes in weather (e.g., observed at intervals of from one minute to one hour). The reason for using the average value of the communication quality is to avoid following sudden short-time fluctuations in the communication quality.

On the other hand, vibration frequency and vibration period of the structure 40 are determined according to the natural frequency and the natural period of the structure 40. The natural frequency of the structure such as the lamp post, the bus shelter and the like is considered to be in a range of about 0.1 Hz to about 20 Hz, and typically in a range of about 1 Hz to about 10 Hz. The natural period of these structures is in a range of about 0.05 second to about 10 seconds, and is typically in a range of about 0.1 second to about 1 second. Therefore, the vibration period of the structure 40 to which the point-to-point radio antenna 10 is attached is considered to be in a range of about 0.05 second to about 10 seconds, and typically in a range of about 0.1 second to about 1 second.

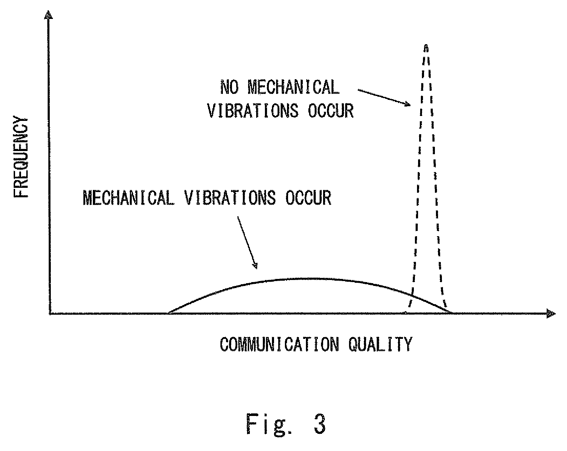

Fig. 3 is a frequency distribution diagram showing one example of influence of mechanical vibrations of the antenna 10 or 20 on the communication quality. The communication quality is, for example, received signal strength, an SNR, or a BER. The graph shown by the dashed line in Fig. 3 indicates distribution of the communication quality of the radio link 50 when neither mechanical vibrations of the antennas 10 nor 20 occur. In contrast, the graph shown by the solid line in Fig. 3 indicates distribution of the communication quality of the radio link 50 when mechanical vibrations of the antennas 10 and 20 occur. It should be noted that, when the mechanical vibrations occur, the average value (or median value) of the communication quality decreases and, furthermore, the fluctuation (variation) of the communication quality increases. As described above, the time scale of the fluctuations in the communication quality is determined by the natural period of the structure 40, to which the antenna 10 or 20 is attached, and is much shorter than the time scale of changes in the meteorological conditions (e.g., rain, fog, mist, haze, smoke, or smog).

As can be understood from the above description, the "average value" of the communication quality, which is used in the AMC as an index to deal with changes in the propagation state due to meteorological conditions, may be unsuitable to be used as an index to observe degradation of the communication quality due to mechanical vibrations of the antenna 10 or 20. This is because the "average value" of the communication quality cannot sufficiently express the fluctuation (variation) of the communication quality due to mechanical vibrations.

Further, in the observation of the communication quality with a long time scale (e.g., observation at intervals of from one minute to one hour) for the AMC to deal with changes in the propagation state due to the meteorological conditions, degradation of the communication quality due to mechanical vibrations of the antenna 10 or 20 could not be observed. This is because the time scale of the vibration period of the antenna 10 or 20, which is determined according to the natural period of the structure 40, is much shorter than the time scale of the speed of changes in weather.

In view of the aforementioned discussion, each of the controllers 12 and 22 is configured to adjust a modulation scheme, a code rate and the like based on mechanical vibrations of the antenna 10 or 20. Specifically, in some implementations, each of the controllers 12 and 22 adjusts at least one of the following (a) to (e) in response to detection of mechanical vibrations of the antenna 10 or 20 (or according to the magnitude of the mechanical vibrations):
(a) modulation scheme applied to a transmission signal of the transceiver 11 (or 21);
(b) code rate applied to a transmission signal of the transceiver 11 (or 21);
(c) transmission power applied to a transmission signal of the transceiver 11 (or 21);
(d) transmission beam width applied to a transmission signal of the transceiver 11 (or 21); and
(e) reception beam width applied to a received signal of the transceiver 11 (or 21).

For example, when mechanical vibrations of the antenna 10 or 20 are detected, the controller 12 may change the modulation scheme to be applied to the transmission signal of the transceiver 11 from a first modulation scheme having a small inter-symbol distance (e.g., 64 quadrature amplitude modulation (64-QAM)) to a second modulation scheme having a large inter-symbol distance (e.g., 16-QAM or quadrature phase shift keying (QPSK)). Further or alternatively, the controller 12 may select one of modulation schemes so that the inter-symbol distance becomes larger as the mechanical vibrations of the antenna 10 or 20 become larger. The mechanical vibrations of the antenna 10 or 20 may increase a propagation loss of the radio link 50 and decrease the received signal strength. Accordingly, while the mechanical vibrations of the antenna 10 or 20 are occurring, using the modulation scheme having a relatively large inter-symbol distance, which is more tolerant to noise and interference, can suppress increase in the code error rate.

When mechanical vibrations of the antenna 10 or 20 are detected, the controller 12 may decrease the code rate to be applied to the transmission signal of the transceiver 11 (that is, increase the redundancy of the transmission signal). Further or alternatively, the controller 12 may decrease the code rate as the mechanical vibrations of the antenna 10 or 20 increase. It is thus possible to suppress increase in the code error rate due to the mechanical vibrations of the antenna 10 or 20.

When mechanical vibrations of the antenna 10 or 20 are detected, the controller 12 may increase the transmission power of the transceiver 11. Further or alternatively, the controller 12 may increase the transmission power of the transceiver 11 as the mechanical vibrations of the antenna 10 or 20 increase. It is thus possible to compensate for decrease in the received signal strength due to the mechanical vibrations of the antenna 10 or 20, whereby it is possible to suppress increase in the code error rate.

When mechanical vibrations of the antenna 10 or 20 are detected, the controller 12 may increase one or both of the transmission beam width and the reception beam width of the antenna 10. Further or alternatively, the controller 12 may increase one or both of the transmission beam width and the reception beam width as the mechanical vibrations of the antenna 10 or 20 increase. When a narrow directed beam is used while the mechanical vibrations of the antenna 10 or 20 are occurring, a range of fluctuations in the received signal strength becomes wide. Therefore, by using relatively wide directed beam while the mechanical vibrations of the antenna 10 or 20 are occurring, the range of fluctuations in the received signal strength can be made narrow, and the range of fluctuations in the code error rate can be reduced.

In one example, mechanical vibrations of the antenna 10 or 20 are directly detected using a vibration sensor. The vibration sensor measures displacement, velocity, or acceleration of an object. In some implementations, the vibration sensor is coupled to the structure 40, the antenna 10 (20), or the transceiver 11 (21) and measures displacement, velocity, or acceleration of the structure 40, the antenna 10 (20), or the transceiver 11 (21). By using the vibration sensor, it is possible to directly observe the mechanical vibrations of the structure 40, the antenna 10 (20), or the transceiver 11 (21).

In another example, mechanical vibrations of the antenna 10 or 20 are indirectly detected by observing fluctuations in the communication quality of the radio link 50. For example, each of the controllers 12 and 22 may indirectly detect the mechanical vibrations using a quality index indicating a magnitude of fluctuations in the communication quality of the radio link 50. Specifically, each of the controllers 12 and 22 may determine that the mechanical vibrations are occurring in the antenna 10 or 20 in response to detecting that the magnitude of fluctuations in the communication quality of the radio link 50 exceeds a predetermined level (threshold). This method of using the communication quality of the radio link 50 has the advantages that there is no need to use a vibration sensor and there is no need to provide a new interface to supply the output signal of the vibration sensor to the controllers 12 and 22. Another advantage of using the communication quality of the radio link 50 is that it is highly compatible with an existing AMC that also uses the communication quality of the radio link 50, which means that this method can be easily implemented by an improvement of the existing AMC algorithm.

The quality index indicating a magnitude of fluctuations in the communication quality may be a statistical value (e.g., a standard deviation or dispersion) which indicates a magnitude of variation among measurement values of the communication quality. The measurement values of the communication quality are preferably measured repeatedly at a time interval shorter than the natural period of the structure 40 or the forced vibration period of the structure 40 due to wind, so that the mechanical vibrations can be detected. The natural period of the structure 40 or the forced vibration period of the structure 40 due to wind is in a range of about 0.05 second to 10 seconds, and is typically in a range of about 0.1 second to 1 second.

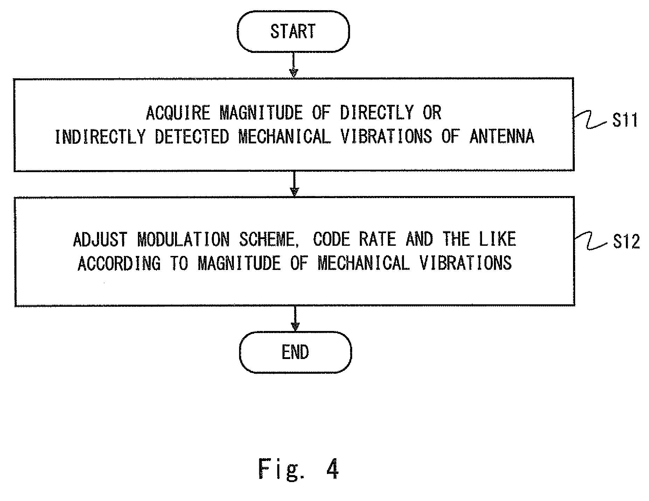

Fig. 4 is a flowchart showing one example of the adaptive control procedure performed by the controllers 12 and 22. In Step S11, the controller 12 (22) acquires a magnitude of mechanical vibrations of the antenna 10 or 20 that have been directly or indirectly detected. The magnitude of the mechanical vibrations may be calculated using an output signal of a vibration sensor or using measurement values of the communication quality of the radio link 50. In Step S12, the controller 12 (22) adjusts at least one of a modulation scheme, a code rate, transmission power, transmission beam width, and reception beam width, according to the magnitude of the mechanical vibrations of the antenna 10 or 20.

As stated above, the point-to-point radio system according to this embodiment is configured to adjust at least one of a modulation scheme, a code rate, transmission power, and transmission beam width, based on mechanical vibrations of the antenna 10 or 20. Accordingly, the point-to-point radio system according to this embodiment can suppress degradation of the communication quality of the point-to-point radio link 50 due to the mechanical vibrations of the structure 40 to which the communication apparatus 1 or 2 (antenna 10 or 20) is attached.

### Second embodiment

In this embodiment, one specific example of configurations of the point-to-point radio system and the adaptive control procedures described in the first embodiment will be described. In this embodiment, an example in which a modulation scheme, a code rate and the like are adjusted according to a magnitude of fluctuations in communication quality of the radio link 50 calculated from a plurality of measurement values of the communication quality is described. The configuration example of the point-to-point radio system according to this embodiment is similar to that of Fig. 1.

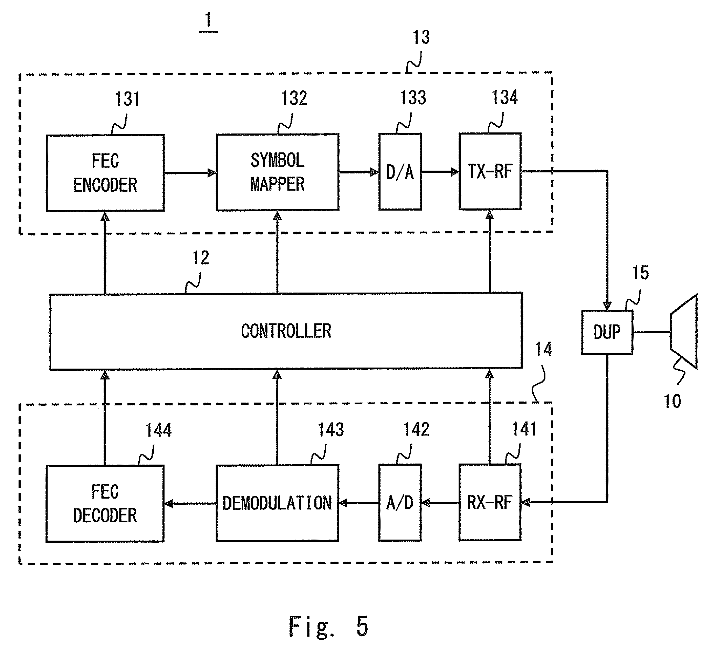

Fig. 5 is a block diagram showing a configuration example of the communication apparatus 1 according to this embodiment. The communication apparatus 2 has a similar configuration as the communication apparatus 1. The communication apparatus 1 shown in Fig. 5 includes an antenna 10, a controller 12, a transmitter 13, a receiver 14, and a duplexer 15. The transmitter 13 and the receiver 14 correspond to the transceiver 11 shown in Fig. 1. Fig. 5 shows an example in which bidirectional communication is performed by frequency division duplex (FDD) and accordingly the duplexer 15 is used to separate a transmission frequency band from a reception frequency band. However, the communication apparatus 1 may perform bidirectional communication by time division duplex (TDD). In the case of the TDD, a high-frequency switch may be used in place of the duplexer 15 to switch transmission and reception.

The transmitter 13 shown in Fig. 5 includes a forward error correction (FEC) encoder 131, a modulator 132, a DA converter 133, and a TX-RF 134. The FEC encoder 131 performs channel coding on transmission data using a FEC scheme. The modulator 132 receives a coded data sequence generated by the FEC encoder 131, maps the coded data sequence to transmission symbols, limits the band of the transmission symbol sequence using a low-pass filter, and thus generates a transmission baseband signal. The DA converter 133 converts the digital transmission baseband signal into an analog signal. The TX-RF 134 generates a modulated signal by mixing the analog transmission baseband signal with a local oscillator signal, up-converts the modulated signal to a carrier frequency (radio frequency (RF)), and amplifies the RF signal and sends it to the antenna 10.

The receiver shown in Fig. 5 includes an RX-RF 141, an AD converter 142, a demodulator 143, and an FEC decoder 144. The RX-RF 141 amplifies a received RF signal, received by the antenna 10, with a Low Noise Amplifier (LNA) and down-converts the received RF signal to an intermediate frequency (IF) band. The AD converter 142 converts the received IF signal into a digital signal. The demodulator 143 performs demodulation processing in the digital domain. That is, the demodulator 143 multiplies the digital received IF signal with a digital sinusoidal signal, performs low-pass filter processing, and thus generates a quadrature baseband signal. Further, the demodulator 143 performs symbol determination (symbol demapping) of the quadrature baseband signal to generate a received data sequence. The FEC decoder 144 carries out error correction of the received data sequence in accordance with the channel coding scheme executed in the opposing apparatus (communication apparatus 2).

The controller 12 refers to communication quality obtained by the receiver 14 and adaptively adjusts at least one of the modulation scheme in the modulator 132, the code rate in the FEC encoder 131, the transmission power in the TX-RF 134, and the transmission beam width (transmission weight vector) in the TX-RF 134. The controller 12 may adaptively adjust the reception beam width (reception weight vector) in the RX-RF 141. The communication quality obtained by the receiver 14 is, for example, received signal strength (RSSI) obtained in the RX-RF 141, an SNR obtained in the demodulator 143, or a BER obtained in the FEC decoder 144.

Further, the controller 12 according to this embodiment observes fluctuations in communication quality of the radio link 50 and adjusts the modulation scheme, the code rate and the like based on the magnitude of fluctuations in the communication quality. That is, the controller 12 according to this embodiment indirectly detects mechanical vibrations of the antenna 10 by observing fluctuations in the communication quality of the radio link 50.

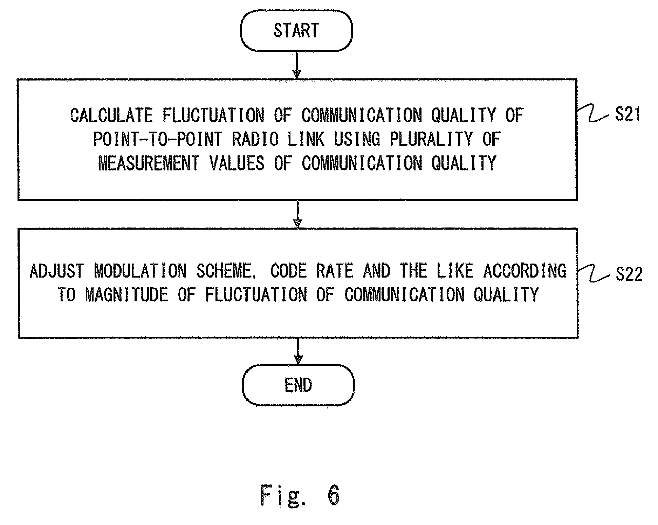

Fig. 6 is a flowchart showing one example of the adaptive control procedure performed by the controller 12 according to this embodiment. The controller 22 performs an adaptive control procedure similar to that in the controller 12. In Step S21, in order to detect fluctuations in the communication quality of the radio link 50 occurring probably due to mechanical vibrations of the antenna 10, the controller 12 acquires a plurality of measurement values of communication quality repeatedly measured at a time interval shorter than the natural period (or the forced vibration period due to wind) of the structure 40 to which the antenna 10 is attached. As already stated above, the natural period of the structure 40 or the forced vibration period due to wind of the structure 40 is in a range of about 0.05 second to about 10 seconds and is typically in a range of about 0.1 second to about 1 second. The controller 12 then calculates a statistical value (e.g., a standard deviation or dispersion) indicating a magnitude of variations among the plurality of measurement values of the communication quality.

In Step S22, the controller 12 adjusts at least one of the modulation scheme, the code rate, the transmission power, the transmission beam width, and the reception beam width according to the magnitude of fluctuations in the communication quality of the radio link 50.

### Third embodiment

In this embodiment, another specific example of configurations of the point-to-point radio system and the adaptive control procedures described in the first embodiment will be described. In this embodiment, an example in which a modulation scheme, a code rate and the like are adjusted according to a magnitude of mechanical vibrations which have been directly detected by a vibration sensor will be described. The configuration example of the point-to-point radio system according to this embodiment is similar to that of Fig. 1.

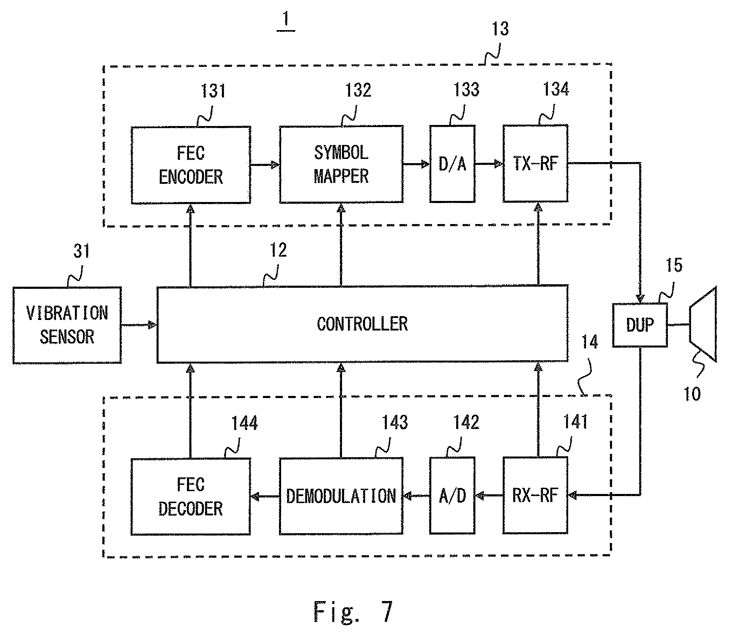

Fig. 7 is a block diagram showing a configuration example of the communication apparatus 1 according to this embodiment. The communication apparatus 2 has a similar configuration as the communication apparatus 1. The communication apparatus 1 shown in Fig. 7 includes a vibration sensor 31. The vibration sensor 31 is coupled to the structure 40, the communication apparatus 1, or the antenna 10 and measures displacement, velocity, or acceleration of the structure 40, the communication apparatus 1, or the antenna 10. The controller 12 according to this embodiment receives an output signal of the vibration sensor 31 and detects mechanical vibrations of the antenna 10 (or the structure 40) based on the output signal of the vibration sensor 31. Since the configurations and the operations of the other elements shown in Fig. 7 are similar to those of the elements denoted by the same reference symbols in Fig. 5, the descriptions thereof will be omitted.

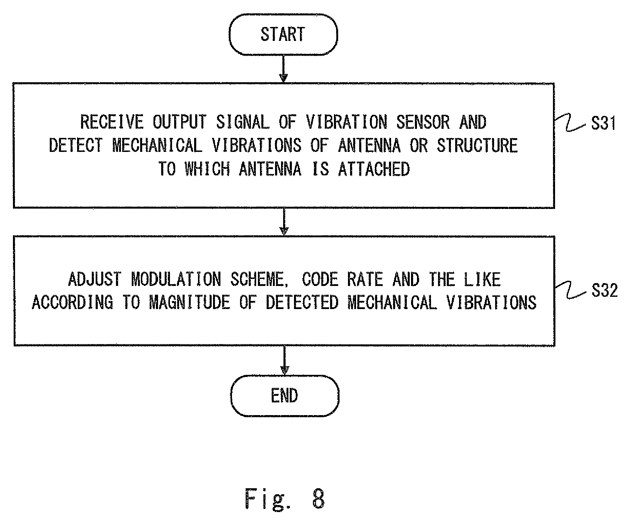

Fig. 8 is a flowchart showing one example of the adaptive control procedure performed by the controller 12 according to this embodiment. The controller 22 performs an adaptive control procedure similar to that in the controller 12. In Step S31, the controller 12 detects mechanical vibrations of the antenna 10 (or the structure 40) based on the output signal of the vibration sensor 31. In Step S32, the controller 12 adjusts at least one of the modulation scheme, the code rate, the transmission power, the transmission beam width, and the reception beam width according to a magnitude of the mechanical vibrations of the antenna 10 (or the structure 40).

### Fourth embodiment

In this embodiment, an improvement of the second embodiment will be described. The configuration example of the point-to-point radio system according to this embodiment is similar to that of Fig. 1. In this embodiment, each of the communication apparatuses 1 and 2 (controllers 12 and 22) performs both first adaptive processing to deal with fluctuations in the communication quality of the radio link 50 due to mechanical vibrations of the antenna 10 and second adaptive processing to deal with degradation of the communication quality of the radio link 50 due to meteorological conditions (e.g., rain, fog, mist, haze, smoke, or smog). In the following description, the first adaptive processing and the second adaptive processing are respectively called a first AMC and a second AMC.

The first AMC is similar to adaptive processing described in the first and second embodiments. That is, in the first AMC, each of the controllers 12 and 22 calculates a magnitude of fluctuations in the communication quality (e.g., RSSI, SNR, or BER) of the radio link 50 using a plurality of measurement values of the communication quality repeatedly measured at an interval shorter than the natural period (or the forced vibration period due to wind) of the structure 40 and adjusts the modulation scheme, the code rate and the like according to the magnitude of fluctuations in the communication quality.

Meanwhile, the second AMC is an AMC to deal with changes in the propagation state due to meteorological conditions. That is, in the second AMC, each of the controllers 12 and 22 adjusts the modulation scheme, the code rate and the like according to a magnitude of an average of measurement values of the communication quality of the radio link (e.g., RSSI, SNR, or BER) observed with a long time scale corresponding to speed of changes in weather (e.g., observed at intervals of from one minute to one hour). The reason for using the average value of the communication quality is to avoid following sudden short-time fluctuations in the communication quality.

As can be understood from the above description, the first and second AMCs should use different communication quality indices with different time scales. The first AMC uses a statistical value (e.g., a standard deviation or dispersion) indicating a magnitude of fluctuations in the communication quality of the radio link 50 in a period shorter than the natural period of the structure 40, in order to determine the mechanical vibrations of the antenna 10. On the other hand, the second AMC uses an average value of the communication quality of the radio link 50, in order to determine degradation of line-of-sight visibility between the antennas 10 and 20 due to changes in weather in a relatively long time scale and in order to avoid following sudden short-time fluctuations in the quality of the radio link.

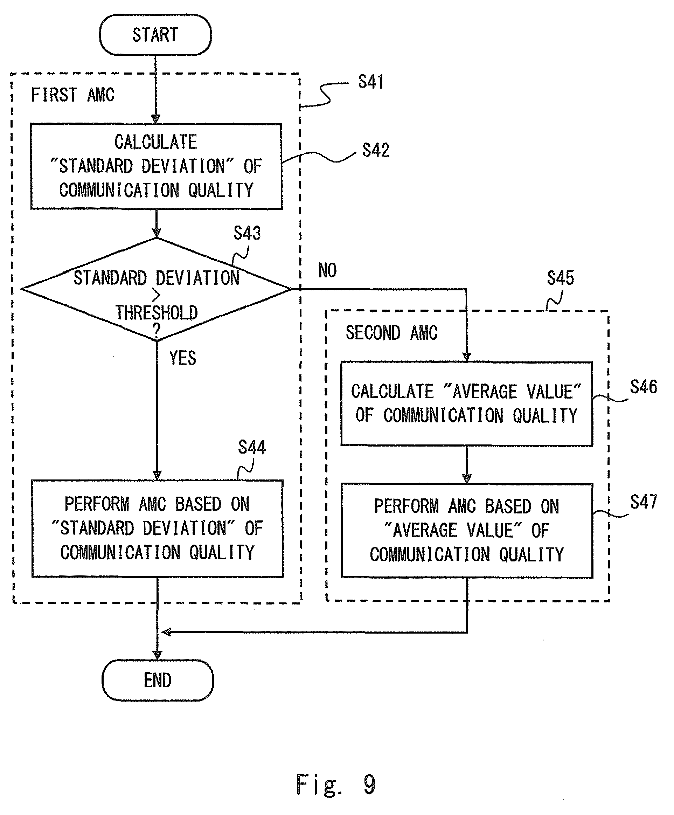

Fig. 9 is a flowchart showing one example of the adaptive control procedure performed by the controller 12 according to this embodiment. The controller 22 performs an adaptive control procedure similar to that in the controller 12. In the example shown in Fig. 9, a standard deviation of the communication quality is used to indicate a magnitude of fluctuations in the communication quality of the radio link 50. In the example shown in Fig. 9, the first AMC (S41), to deal with the mechanical vibrations of the antenna 10, is preferentially performed. If it is determined that the fluctuations in the communication quality due to the mechanical vibrations of the antenna 10 are small, then the second AMC (S45), to deal with changes in the meteorological conditions, is performed.

The first AMC (S41) shown in Fig. 9 includes Steps S42 to S44. In Step S42, the controller 12 calculates the standard deviation of the communication quality of the radio link 50. As already stated above, this standard deviation may be a standard deviation of the plurality of measurement values of the communication quality repeatedly measured during a time period that is shorter than the natural period of the structure 40. In Step S43, the controller 12 determines whether the standard deviation of the communication quality exceeds a predetermined threshold. When the standard deviation of the communication quality exceeds the threshold (YES in Step S43), the controller 12 carries out the AMC based on the standard deviation of the communication quality (Step S44). For example, the controller 12 adjusts at least one of the modulation scheme, the code rate, the transmission power, the transmission beam width, and the reception beam width according to the magnitude of the standard deviation of the communication quality.

On the other hand, when the standard deviation of the communication quality is equal to or smaller than the predetermined threshold (NO in Step S43), the controller 12 performs the second AMC (S45). That is, the controller 12 calculates an average value of the communication quality of the radio link 50 (Step S46) and performs AMC based on the average value of the communication quality (Step S47). For example, the controller 12 adjusts at least one of the modulation scheme, the code rate, the transmission power, the transmission beam width, and the reception beam width according to the magnitude of the average value of the communication quality.

As will be understood from the above description, the point-to-point radio system according to this embodiment performs both the first AMC to address the mechanical vibrations of the antenna 10 and the second AMC to address degradation of line-of-sight visibility between the antennas 10 and 20 due to changes in weather, whereby it is possible to keep the communication quality of the radio link 50 more reliably.

### Other embodiments

The adaptive control described in the plurality of embodiments stated above may be performed only in the communication apparatus 1 or 2. For example, such an adaptive control may be performed only in the communication apparatus 1 or 2 that is attached to the structure (a lamp post, a bus shelter and the like) that tends to be easily deformed by an external force.

In the plurality of embodiments stated above, the examples in which the communication apparatuses 1 and 2 bidirectionally transmit signals via the point-to-point radio link have been described. However, the communication apparatuses 1 and 2 may be configured to transmit signals only in one direction via the point-to-point radio link. In this case, the communication quality (received signal quality) measured in the receiving communication apparatus (e.g., communication apparatus 2) may be fed back to the transmitting communication apparatus (e.g., communication apparatus 1). This feedback may be performed via a control line different from the point-to-point radio link.

The architectures of the communication apparatuses 1 and 2 shown in Figs. 5 and 7 are merely examples. Various types of transmission and reception architecture for point-to-point radio have been proposed. The communication apparatuses 1 and 2 may employ these various types of transmission and reception architecture.

The plurality of embodiments stated above may be combined as appropriate.

The adaptive processing performed by each of the controllers 12 and 22 described in the plurality of embodiments stated above may be implemented using a semiconductor processing device including an Application Specific Integrated Circuit (ASIC). Further, these processing may be implemented by causing a computer system including at least one processor (e.g., microprocessor or Digital Signal Processor (DSP)) to execute a program. Specifically, one or more programs including instructions to cause a computer system to perform the algorithms described with reference to the flowcharts and the like may be created and these programs may be supplied to the computer system.

The program(s) can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g., magneto-optical disks), Compact Disc Read Only Memory (CD-ROM), CD-R, CD-R/W, and semiconductor memories (such as mask ROM, Programmable ROM (PROM), Erasable PROM (EPROM), flash ROM, Random Access Memory (RAM), etc.). The program(s) may be provided to a computer using any type of transitory computer readable media. Examples of transitory computer readable media include electric signals, optical signals, and electromagnetic waves. Transitory computer readable media can provide the program(s) to a computer via a wired communication line (e.g., electric wires, and optical fibers) or a wireless communication line.

The above embodiments are merely examples of applications of technical ideas obtained by the present inventor. Needless to say, these technical ideas are not limited to the above embodiments and various modifications can be performed on these technical ideas.

For example, the whole or part of the embodiments disclosed above can be described as, but not limited to, the following supplementary notes.

### (Supplementary Note 1)

A point-to-point radio system, including:
first and second communication apparatuses configured to be respectively connected to first and second antennas and to perform communication through the first and second antennas, the first and second antennas being respectively attached to first and second structures; and
a control unit that adjusts, based on a quality index related to mechanical vibrations of at least one of the first and second structures, a radio communication parameter to be applied to the communication.

### (Supplementary Note 2)

The point-to-point radio system according to Supplementary Note 1, in which the radio communication parameter includes at least one of a modulation scheme, a code rate, transmission power, transmission beam width, and reception beam width.

### (Supplementary Note 3)

The point-to-point radio system according to Supplementary Note 1 or 2, in which the quality index indicates a magnitude of variations among communication quality measurement values repeatedly measured at a time interval that is shorter than a natural period of the first or second structure or than a forced vibration period due to wind of the first or second structure.

### (Supplementary Note 4)

The point-to-point radio system according to Supplementary Note 3, in which each of the natural period and the forced vibration period is in a range of 0.05 to 10 seconds.

### (Supplementary Note 5)

The point-to-point radio system according to Supplementary Note 1 or 2, in which the quality index is a standard deviation or dispersion of a plurality of communication quality measurement values repeatedly measured at a time interval that is shorter than a predetermined period of time.

### (Supplementary Note 6)

The point-to-point radio system according to Supplementary Note 5, in which the predetermined period of time is in a range of 0.05 to 10 seconds.

### (Supplementary Note 7)

The point-to-point radio system according to any one of Supplementary Notes 1 to 6, in which the control unit increases transmission beam width or reception beam width of the first or second antenna as the mechanical vibrations increase.

### (Supplementary Note 8)

A point-to-point radio system, including:
first and second communication apparatuses configured to be respectively connected to first and second antennas and to perform communication through the first and second antennas, the first and second antennas being respectively attached to first and second structures; and
a control unit that adjusts, based on a first quality index related to propagation characteristics of a radio link and a second quality index related to mechanical vibrations of at least one of the first and second structures, a radio communication parameter to be applied to the communication.

### (Supplementary Note 9)

The point-to-point radio system according to Supplementary Note 8, in which the radio communication parameter includes at least one of a modulation scheme, a code rate, transmission power, transmission beam width, and reception beam width.

### (Supplementary Note 10)

The point-to-point radio system according to Supplementary Note 8 or 9, in which
the first quality index indicates communication quality regarding the communication per first time period, and
the second quality index indicates a magnitude of fluctuations in communication quality of the radio link derived from a plurality of communication quality measurement values repeatedly measured during a second time period that is shorter than the first time period.

### (Supplementary Note 11)

The point-to-point radio system according to any one of Supplementary Notes 8 to 10, in which the second quality index indicates a magnitude of fluctuations in communication quality of the radio link occurring due to the mechanical vibrations of the first or second structure.

### (Supplementary Note 12)

The point-to-point radio system according to any one of Supplementary Notes 8 to 11, in which the second time period is determined according to a natural period of the first or second structure or a forced vibration period due to wind of the first or second structure.

### (Supplementary Note 13)

The point-to-point radio system according to any one of Supplementary Notes 8 to 12, in which the second quality index is a standard deviation or dispersion of a plurality of communication quality measurement values regarding the communication.

### (Supplementary Note 14)

The point-to-point radio system according to Supplementary Note 10, in which the second time period is in a range of 0.05 to 10 seconds.

### (Supplementary Note 15)

The point-to-point radio system according to any one of Supplementary Notes 8 to 14, in which the first quality index indicates degradation of the communication quality of the radio link occurring due to degradation of line-of-sight visibility between the first antenna and the second antenna according to meteorological conditions.

### (Supplementary Note 16)

The point-to-point radio system according to any one of Supplementary Notes 8 to 15, in which the first quality index indicates degradation of the communication quality of the radio link caused by an attenuation effect of at least one of rain, fog, mist, haze, smoke, and smog.

### (Supplementary Note 17)

The point-to-point radio system according to any one of Supplementary Notes 8 to 16, in which the first quality index is an average value of communication quality of the radio link.

### (Supplementary Note 18)

The point-to-point radio system according to Supplementary Note 10 or 14, in which the first time period is in a range of one minute to one hour.

This application is based upon and claims the benefit of priority from Japanese Patent Application No. 2013-149366, filed on July 18, 2013, the disclosure of which is incorporated herein in its entirety by reference. Reference Signs List

- 1, 2: COMMUNICATION APPARATUS
- 10, 20: ANTENNA
- 11, 21: TRANSCEIVER
- 12, 22: CONTROLLER
- 13: TRANSMITTER
- 14: RECEIVER
- 15: DUPLEXER
- 31: VIBRATION SENSOR
- 40: STRUCTURE
- 50: POINT-TO-POINT RADIO LINK
- 51: DIRECTED BEAM
- 131: FORWARD ERROR CORRECTION (FEC) ENCODER
- 132: SYMBOL MAPPER
- 133: DA CONVERTER
- 134: TRANSMISSION RF UNIT (TX-RF)
- 141: RECEPTION RF UNIT (RX-RF)
- 142: AD CONVERTER
- 143: DEMODULATOR
- 144: FEC DECODER

## Claims

1. A point-to-point radio system, comprising:
first and second communication apparatuses configured to be respectively connected to first and second antennas and to perform communication through the first and second antennas, the first and second antennas being respectively attached to first and second structures; and
control means for adjusting, based on a quality index related to mechanical vibrations of at least one of the first and second structures, a radio communication parameter to be applied to the communication.

2. The point-to-point radio system according to Claim 1, wherein the radio communication parameter comprises at least one of a modulation scheme, a code rate, transmission power, transmission beam width, and reception beam width.

3. The point-to-point radio system according to Claim 1 or 2, further comprising detection means for directly or indirectly detecting the mechanical vibration,
wherein the quality index is calculated based on a detection result by the detection means.

4. The point-to-point radio system according to Claim 3, wherein the detection means directly measures the mechanical vibrations using a vibration sensor coupled to the first antenna, the second antenna, the first structure, or the second structure.

5. The point-to-point radio system according to Claim 3, wherein the detection means indirectly measures the mechanical vibrations based on fluctuations in communication quality regarding the communication.

6. A communication apparatus comprising:
an antenna attached to a structure;
communication means electrically connected to the antenna; and
control means for controlling, based on a quality index indicating communication quality related to vibrations of the structure, a radio communication parameter to be applied to the communication means.

7. The communication apparatus according to Claim 6, wherein the radio communication parameter comprises at least one of a modulation scheme, a code rate, transmission power, transmission beam width, and reception beam width.

8. The communication apparatus according to Claim 6 or 7, further comprising detection means for directly or indirectly detecting the vibration,
wherein the quality index is calculated based on a detection result by the detection means.

9. The communication apparatus according to Claim 8, wherein the detection means directly measures the vibrations using a vibration sensor coupled to the antenna or the structure.

10. The communication apparatus according to Claim 8, wherein the detection means indirectly measures the mechanical vibrations based on fluctuations in communication quality regarding the communication.

11. A communication control method for a point-to-point radio communication, the method comprising:
performing communication through an antenna attached to a structure; and
controlling, based on mechanical vibrations of the structure, a radio communication parameter to be applied to the communication.

12. A non-transitory computer readable medium storing a program for causing a computer to perform a communication control method for a point-to-point radio communication through an antenna attached to a structure,
wherein the communication control method includes adjusting, based on mechanical vibrations of the structure, a radio communication parameter to be applied to the communication.

13. A point-to-point radio system, comprising:
first and second communication apparatuses configured to be respectively connected to first and second antennas and to perform communication through the first and second antennas, the first and second antennas being respectively attached to first and second structures; and
control means for adjusting, based on a first quality index related to propagation characteristics of a radio link and a second quality index related to mechanical vibrations of at least one of the first and second structures, a radio communication parameter to be applied to the communication.

14. The point-to-point radio system according to Claim 13, wherein the radio communication parameter comprises at least one of a modulation scheme, a code rate, transmission power, transmission beam width, and reception beam width.

15. The point-to-point radio system according to Claim 13 or 14, further comprising detection means for directly or indirectly detecting the mechanical vibration,
wherein the second quality index is calculated based on a detection result by the detection means.

16. The point-to-point radio system according to Claim 15, wherein the detection means directly measures the mechanical vibrations using a vibration sensor coupled to the first antenna, the second antenna, the first structure, or the second structure.

17. The point-to-point radio system according to Claim 15, wherein the detection means indirectly measures the mechanical vibrations based on fluctuations in communication quality regarding the communication.

18. A communication apparatus that performs a point-to-point radio communication, the communication apparatus comprising:
communication means connected to an antenna attached to a structure; and
control means for adjusting, based on a first quality index related to propagation characteristics of a radio link and a second quality index related to mechanical vibrations of the structure, a radio communication parameter to be applied to the communication.

19. The communication apparatus according to Claim 18, wherein the radio communication parameter comprises at least one of a modulation scheme, a code rate, transmission power, transmission beam width, and reception beam width.

20. A communication control method for a point-to-point radio communication, the method comprising:
performing communication through an antenna attached to a structure; and
adjusting, based on a first quality index related to propagation characteristics of a radio link and a second index related to mechanical vibrations of the structure, a radio communication parameter to be applied to the communication.

21. A non-transitory computer readable medium that stores a program for causing a computer to perform a communication control method for a point-to-point radio communication through an antenna attached to a structure,
wherein the communication control method includes adjusting, based on a first quality index related to propagation characteristics of a radio link and a second index related to mechanical vibrations of the structure, a radio communication parameter to be applied to the communication.
